# EUROPEAN PATENT SPECIFICATION

(11) **EP 4 446 098 B1**
(45) Date of publication and mention of the grant of the patent: **02.12.2026**
(21) Application number: 23167747.7
(22) Date of filing: 13.04.2023
(51) Int. Cl.: B29C 70/38, B29D 99/00, B65H 16/00, B65H 19/12, B65H 49/00, B65H 75/18, F03D 1/06, B29C 31/04, B29C 70/54, B65H 19/18, B29L 31/08, G01S 17/93

(54) **AN ASSEMBLY FOR MOULDING A WIND TURBINE BLADE SHELL PART FROM FIBRE SHEETS**
ANORDNUNG ZUM FORMEN EINES WINDTURBINENSCHAUFELSCHALENTEILS AUS FASERBAHNEN
ENSEMBLE POUR MOULER UNE PARTIE DE COQUE DE PALE D'ÉOLIENNE À PARTIR DE FEUILLES DE FIBRES

(43) Date of publication of application: 16.10.2024
(73) Proprietor: LM Wind Power A/S, 6000 Kolding (DK)
(72) Inventor: CHOUINARD, Guillaume, QC G4X 2M1 Gaspe (CA); JOHNSON, Jonathan, QC G4X 2M1 Gaspe (CA)
(74) Representative: COPA Copenhagen Patents

(56) References cited:
- EP-B1- 2 722 684
- CN-A- 113 636 416
- CN-U- 212 503 148
- JP-U- S5 331 644
- US-A1- 2016 114 539

## Description

### Field of the invention

The present invention relates to providing a moulding assembly for manufacturing a shell part of a wind turbine blade, and to a method of manufacturing a shell part of a wind turbine blade using the moulding assembly.

### Background of the invention

Climate change has created an urgent need for sustainable energy, putting the spotlight on wind power as a cost-effective and clean energy source. Wind turbines typically comprise a tower, generator, gearbox, nacelle, and one or more rotor blades, which capture kinetic energy of wind using known airfoil principles. With increasing energy demand, modern wind turbines can have power ratings of above 10 MW and may have rotor blades that exceed 100 meters in length.

Wind turbine rotor blades are typically made from a fibre-reinforced polymer material, comprising a pressure side shell half and a suction side shell half, also called blade halves. The cross-sectional profile of a typical blade includes an airfoil for creating an air flow leading to a pressure difference between both sides. The resulting lift force generates torque for producing electricity.

The shell halves of rotor blades are often manufactured using blade moulds. First, a blade gel coat or primer is applied to the mould. Subsequently, fibre reinforcement and/or fabrics are placed into the mould followed by resin infusion. A vacuum is typically used to draw epoxy resin material into a mould. Alternatively, prepreg technology can be used in which a fibre or fabric pre-impregnated with resin forms a homogenous material which can be introduced into the mould. Several other moulding techniques are known for manufacturing wind turbine blades, including compression moulding and resin transfer moulding. The shell halves are usually assembled by being glued or bolted together substantially along a chord plane of the blade.

Thus, shell halves typically comprise fibre-reinforced plastics such as glass-reinforced plastics, comprising a layup of a plurality of fibre sheets into the blade mould to form the various layers of the blade shell. The layup of these various sheets, which are usually provided on sheet supply rolls, can be very time consuming and challenging as every fibre ply has to be carefully laid into the mould ensuring that there are no defects such as wrinkle formation. Another challenge is the use of various different types of fibre sheets, in particular in the blade root section. Typically, the various fibre sheets have to be arranged in the mould quickly, accurately and in a pre-determined order or sequence. Also, for modern wind turbine blades up to one third of the fibre sheets of the root layup are too heavy to handle by operators.

Some of the known methods of placement of fibre sheets in the blade mould rely on cranes to pick up and lift the various fibre sheets into the mould. This can be quite tedious and is prone to layup mistakes, in particular in terms of the pre-defined order of placement of the sheets.

US 2016/114539 A1 discloses a manufacturing arrangement for the manufacture of a rotor blade, including a pair of tracks arranged along the longitudinal sides of a blade mold, a first gantry assembly realized to span the track pair and to carry a first tool arrangement, which first tool arrangement includes at least a fiber distributor, a second gantry assembly realized to span the track pair and to carry a second tool arrangement, and a control arrangement realized to effect a coordinated movement of the gantry assemblies along the track pair and to coordinate the operation of the second tool arrangement with the operation of the first tool arrangement.

Thus, it would be desirable to provide a method of moulding a wind turbine blade which reduces the amount of time required to arrange fibre sheets into the required position within the blade mould. It is therefore a first object of the present invention to provide an efficient and safe method of arranging fibre sheets for a wind turbine blade shell part in the blade mould.

It is a further object of the present invention to provide a flexible and efficient tool and/or moulding assembly for such methods.

It is another object of the present invention to provide an improved method of manufacturing a wind turbine blade which minimizes layup mistakes, in particular with respect to the sequence of fibre sheet layup.

### Summary of the invention

The present invention addresses one or more of the above-discussed objects by providing a moulding assembly for manufacturing a shell part of a wind turbine blade, the moulding assembly comprising a blade mould comprising a moulding cavity for moulding the shell part, the moulding cavity having a root end and an opposing tip end, a rack, preferably arranged at the root end of the moulding cavity, the rack comprising a plurality of receiving portions, a plurality of cartridges, each cartridge being arranged on a respective receiving portion of the rack, a plurality of sheet supply rolls arranged, preferably rotatably arranged, within each cartridge, wherein each cartridge comprises a guide member, preferably two opposing guide members, configured to guide each sheet supply roll along a predetermined path within the cartridge.

This solution has been found to significantly increase the productivity of the layup process at the root end of the blade mould, also addressing the ergonomic challenges posed by the weight of some of the sheets for layup. By using the rack and cartridges of the present invention the correct layup sequence can be ensured when filling the respective cartridges with the supply sheet rolls in the correct order. Also, when distributing the sheets in the mould, the operators do not have to lift the rolls by themselves. The present solution reduces the physical and mental effort involved in some of the known approaches for manufacturing a wind turbine blade shell part.

The blade mould is typically a blade mould for a shell half of a wind turbine blade, such as a pressure side shell half or a suction side shell half. The blade mould may typically have a length of at least 50 meters, preferably at least 70 meters. The shell part is preferably a shell half of a blade, such as a downwind shell half or an upwind shell half. In some embodiments, the shell part is a root laminate, a main laminate or a part thereof. In another embodiment, the shell part is a blade half. In other embodiments, the shell part is a full blade.

The sheets preferably comprise a fibre material, such as a glass fibre material. The sheets can be placed within the root region of a blade mould, thus constituting part of the root laminate. The root region may correspond to a region of the blade having a substantially circular or elliptical cross-section. However, the sheets could also be used for other parts and regions of a wind turbine blade, such as trailing edge or leading-edge reinforcements or adhesive flanges.

In a preferred embodiment, each of the sheets is configured to form a blade section starting from the root end of the wind turbine blade. Thus, preferably each of the sheets is configured to be arranged at the root end of the blade mould. In a preferred embodiment, the sheets are used as part of the root region of a wind turbine blade, such as the root laminate. The root region may extend up to 40 meters, such as up to 25 meters, from the root end of the blade, as seen in its longitudinal direction. In other embodiments, the root region may extend to the shoulder of the blade +/- 5 meters.

The moulding cavity has a root end and an opposing tip end, and preferably corresponds substantially to the outer surface of a wind turbine blade shell half. One or more sheets of fibre material are typically laid into the moulding cavity, such as sheets of fibre material which may comprise glass fibres, carbon fibres or a combination thereof.

Preferably, each supply roll carries one or more sheets, preferably sheets comprising a fibre material, preferably a glass fibre material, such as one or more fibre mats or fibre fabrics. The sheet supply roll typically has a weight from 20 to 80 kilograms.

The rack can be arranged at the root end of the moulding cavity, for example, it can be pushed towards the root end of the mould such that it abuts the root end of the mould. In some embodiments the rack can be releasable fastened to the root end of the mould. Typically, the rack will have a width of 5.5-7 meters, a height of 3-5 meters (without the cartridges loaded on the rack), and a depth of 1.5-2.5 meters.

The rack comprises a plurality of receiving portions, preferably at least three receiving portions. The receiving portions can be formed by a framework of bars or rods such that a cartridge can be supported safely on the respective receiving portion, preferably in a horizontal position. It is preferred that the rack has a substantially cuboid shape, such as cuboid framework of bars or rods. Two receiving portions are preferably formed on top of the rack, and a third receiving portion is preferably provided within a centre region of the rack. Thus, the preferred arrangement of the three receiving portions, and the three cartridges received in the receiving portions is preferably a symmetrical arrangement. The third receiving portion may be smaller than the first two receiving portions.

Each cartridge is arranged in a respective receiving portion of the rack, such as on top of the rack or at the centre of the rack. In a preferred embodiment, the cartridges are generally cuboid shaped or box shaped. The cartridges preferably have an open top, thus facilitating loading of the fibre supply rolls. Typically, each cartridge comprises a front wall, usually facing the moulding cavity when the rack is arranged at the root end, opposing side walls, and a rear wall. Each of the walls can comprise a plurality of panels, such as 2-4 panels, and optionally a frame for fitting the panels. Also, usually each cartridge comprises a floor plate, preferably wherein the cartridge is upwardly open. In some embodiments one or more hollow profiles are mounted underneath the floor plate to facilitate mounting of the cartridge on or within the rack.

Each cartridge comprises at least one guide member, such as two opposing guide members, configured to guide each sheet supply roll along a predetermined path, preferably a sloped downward path, within the cartridge. The guide member(s) may be arranged at the inside surfaces of opposing side walls of the cartridge. The sheet supply rolls are preferably connected to the guide member, most preferably connected to two opposing guide members, by their respective shaft ends or respective bearings provided on each shaft end. It is preferred that each roll is rotatably suspended between two opposing guide members, preferably each being arranged on the inside surface of opposing side walls of the cartridge.

A plurality of sheet supply rolls can be arranged within each cartridge on the guide member, preferably in between two opposing guide members, of the respective cartridge. Up to 30 sheet supply rolls may be arranged within each cartridge. Preferably, at least five sheet supply rolls are arranged within each cartridge, more preferably at least ten sheet supply rolls. In some embodiments, 5-30, such as 10-30, sheet supply rolls are arranged within each cartridge on the guide member, preferably in between two opposing guide members, of each cartridge.

In a preferred embodiment, each cartridge comprises at least one access opening, preferably facing the root end of the moulding cavity of the blade mould, said access opening being configured for accessing and unwinding one or more sheets from a sheet supply roll arranged within the cartridge. It is particularly preferred that said predetermined path leads to a dispensing position located at, or adjacent to, the access opening to allow unwinding of one or more sheets from a sheet supply roll through the access opening.

The access opening is preferably formed in the front wall of the cartridge, typically as a horizontally extending slot or cut-out in the front wall, preferably adjacent the floor plate of the cartridge. Said access opening is advantageously configured for accessing and unwinding one or more sheets from a sheet supply roll arranged within the cartridge. The access opening preferably extends along the entire width of the front wall of the cartridge. Preferably, the access opening has a height of 500-1000 mm. Said access opening preferably has a rectangular shape.

In a preferred embodiment, the sheet supply rolls are arranged within the cartridges in a predefined order corresponding to a layup sequence of the fibre sheets in the blade mould. Thus, the supply roll carrying the sheet(s), which is to be laid into the moulding cavity first, is loaded into the cartridge first, followed by a second supply roll, and so on. This is found to lead to a reduction of layup mistakes because the layup order is predetermined and fixed already at the cartridge loading step.

Each cartridge comprises a guide member, such as two or more guide members, most preferably two opposing guide members, configured to guide each sheet supply roll along a predetermined path, preferably a downwardly sloped path, within the cartridge. Thus, most preferably, the path, or a part thereof, is at an angle to the horizontal. Preferably, the predetermined path may start at a loading position, the path may comprise a dispensing position at which the sheet(s) is unwound from the roll, and the path may end at a disposal position.

It is particularly preferred that the path comprises two or more sections, such as linear sections, particularly preferred wherein the two or more linear sections are arranged at different heights within of the cartridge. Thus, in some embodiments a first section may be arranged at a first height within the cartridge and a second section may be arranged at a lower height than the first section. Also, a third section may be arranged at a lower height than the second section. It is particularly preferred that said predetermined path is a generally downwardly inclined path, such that the rolls can move along the path by gravitational movement. In a particularly preferred embodiment, the path is a zig-zag path, preferably a downwardly sloped zig-zag path.

The guide member will typically be provided on the inside of the cartridge. It is particularly preferred that each guide member comprises two or more segments, preferably linear segments. It is particularly preferred that the segments of each guide member are arranged at different heights within the cartridge. In other words, it is preferred that each guide member comprises at least two segments, such as three segments, which are vertically spaced apart, preferably wherein the segments are interconnected by one or more chutes. Thus, in some embodiments a first segment of the guide member may be arranged at a first height within the cartridge, and a second segment of the guide member may be arranged at a lower height than the first segment. Also, a third segment of the guide member may be arranged at a lower height than the second segment.

It is particularly preferred that said predetermined path is a generally downwardly inclined path, such that the rolls can move along the path by gravitational movement.

Each guide member is preferably configured to rotatably receive a shaft end, or more preferably a bearing provided at the shaft end, of the sheet supply roll to guide the rolls along the predetermined path. In a particularly preferred embodiment, each guide member comprises a guide slot or track, preferably formed on, or adjacent to, the inside of a sidewall of the cartridge. Preferably, each cartridge comprises two opposing guide members, each comprising a guide slot or track, formed on, or adjacent to, the inside of opposing sidewalls of the cartridge.

In a preferred embodiment, each guide member, or segment thereof, defines a downwardly inclined path to allow for downward passage of the sheet supply roll along the guide member, preferably by gravitational motion. In a preferred embodiment, each guide slot or track, or segment thereof, defines a downwardly inclined path to allow for downward passage of the sheet supply roll along the guide slot or track, preferably by gravitational motion. The terms "downwardly inclined" or "downwardly sloped", as used herein, refer to a path, or a guide member or a segment thereof, that forms an angle with respect to a horizontal plane. In some embodiments, each guide member, or segment thereof, may form an angle of between 1-45°, preferably 1-15° with a horizontal plane.

In some embodiments, the different segments of the guide member may be connected by respective chutes, such that the rolls can fall from the end of a higher segment to the beginning of a lower segment through the chute.

Thus, in a particularly preferred embodiment, the guide member comprises two or more tracks or slots, such as linear tracks or slots, particularly preferred wherein the two or more tracks or slots are arranged at different heights within of the cartridge. Preferably, a first track or slot is arranged at a first height within the cartridge, and a second track or slot is arranged at a lower height than the first track or slot. Also, a third track or slot is preferably arranged at a lower height than the second track or slot. It is particularly preferred that said tracks or slots a generally downwardly inclined, such that the rolls can move on or in said tracks or slots by gravitational movement. Preferably, the tracks or slots, which form the segments of the guide member are interconnected by respective chutes.

In a preferred embodiment, each cartridge comprises at least one movable blocking member for blocking the passage of the sheet supply roll along the guide member in a first position, and for allowing the passage of the sheet supply roll in a second position. Preferably, the blocking member is a rotatable stopper for blocking the passage of the sheet supply roll along the guide member in a first rotational position, and for allowing the passage of the sheet supply roll in a second rotational position. The blocking member may be connected to a lever or handle to move, such as rotate, the blocking member between the first position and the second position. The blocking member could also take the form of a hingedly mounted arm which can be rotated between the first and the second position. In a preferred embodiment, the blocking member comprises a hingedly mounted arm with two ends, wherein the first end is used for blocking the passage of the sheet supply roll along the guide member in a first rotational position of the am, and for allowing the passage of the sheet supply roll in a second rotational position of the arm, and wherein the second end is used for blocking the passage of one or more other sheet supply rolls along the guide member when the arm is in the second rotational position.

As discussed above, the predetermined path preferably starts at a loading position, comprises a dispensing position, preferably comprising an upwardly sloped ramp, at which the sheet(s) is unwound from the roll, and ends at a disposal position. It is particularly, preferred that actuation of the blocking member allows a single roll at a time to pass to said dispensing position at which the sheet(s) is unwound from the roll.

In a preferred embodiment, a ramp, which is preferably sloped upwards, is provided within the cartridge at the dispensing position at which the sheet(s) is unwound from the roll. The ramp advantageously prevents further translational movement of the roll beyond the dispensing position. It is particularly preferred that said dispensing position is provided at, or adjacent to, the access opening to allow unwinding of sheet(s) through the access opening.

According to another preferred embodiment, a pushing member is provided within the cartridge which allows pushing an empty roll over the ramp towards the disposal position, preferably via a chute. The pushing member may be a hingedly mounted plate or panel that can be swung on its hinge by using a nob or lever. After layup, the empty rolls can be removed from the disposal position of the cartridge, which is preferably located at the bottom of the cartridge.

In a preferred embodiment, each sheet supply roll comprises a shaft with bearings arranged at the opposing ends of the shaft, wherein the bearings of each sheet supply roll are received in respective guide members, preferably opposing guide members, such as a respective guide slot or track. Thus, the cartridge preferably comprises two opposing guide slots or tracks each receiving a bearing arranged at a respective shaft end of the sheet supply roll.

In a preferred embodiment, the rack comprises at least one cartridge having a first volume and at least one cartridge having a second volume, wherein the first volume is larger than the second volume. In some embodiments, the rack comprises at least one cartridge having a first size and at least one cartridge having a second size, wherein the first size is larger than the second size. The cartridge of the first volume/size preferably has a width of 2-4 meters, a height of 1.5-2 meters and a depth of 1.8-2.5 meters. The cartridge of the second volume/size preferably has a width of 1.5-2 meters, a height of 1-1.5 meters and a depth of 1.8-2.5 meters. It is preferred that the cartridge of the second volume/size preferably has the same depth, but smaller width and height than the cartridge of the first volume/size. In some embodiments, the first volume is at least two times the second volume. In a preferred embodiment, the rack comprises two cartridges having said first volume and one cartridge having said second volume. The cartridge of the first volume/size preferably comprises a guide member with three segments per sidewall, and the cartridge of the second volume/size preferably comprises a guide member with two segments per sidewall.

Each of the rack and the cartridges may comprise lifting points provided on respective upper corners to lift the rack and/or the cartridge. It is also preferred that the rack comprises a set of wheels mounted to its base in order to enable easy transport and movement of the rack.

In a preferred embodiment, the rack comprises a framework comprising a plurality of bars. In a preferred embodiment, the rack comprises a first half, preferably a first framework, and a second half, preferably a second framework, which can be releasably fastened together along a centreline, preferably a vertically extending centreline, of the rack. The first and second halves may be mirror images of each other. This can help to save space when the rack is not in use.

According to a preferred embodiment, the rack further comprises at least one set of stairs and a platform at the top of said stairs. This allows easy access to the cartridges and to the receiving portions of the rack.

Each cartridge may contain up to 20 sheet supply rolls, preferably up to 30 sheet supply rolls. In a preferred embodiment, the sheet supply rolls comprise one or more fibre sheets, preferably plies of glass fibre material, or a stack of plies of glass fibre material. Typically, each sheet supply roll is configured for unwinding a sheet of continuous fabric from the sheet supply roll.

In a preferred embodiment, each sheet supply roll comprises a cylindrical winding core, wherein one or more sheets are wound around the cylindrical winding core. The cylindrical winding core may be made of a cardboard material. The cylindrical winding core may have a base diameter of 50-200 mm, preferably 50-100 mm. Also, the sheet supply rolls preferably comprise a shaft, such as a central shaft, typically a shaft extending along the longitudinal axis of the supply roll, the shaft being usually surrounded by the winding core for at least part of its length. Typically, respective shaft ends of the roll will protrude from the winding core. The shaft ends, or bearings mounted on the shaft ends, advantageously allow the supply roll to be rotatably arranged in the guide member.

In a preferred embodiment, the moulding assembly further comprises a gantry device movable along the blade mould, and a layup tool suspended from the gantry device, the layup tool being configured to rotatably support at least two sheet supply reels. The term "reels" is used herein to distinguish the sheet supply reels supported by the layup tool from the sheet supply rolls arranged in the cartridges. However, in terms of their general structure the "reels" and "rolls" can be similar, typically comprising a central shaft and a winding core carrying one or more sheets, typically comprising fibre material, such as glass fibre material. However, the sheet supply reels are preferably heavier than the sheet supply rolls of the cartridges. Preferably, each sheet supply reel has a weight of 100-500 kg, preferably 300-500 kg. A first sheet supply reel supported on the layup tool may comprise a first type of fibre sheet material, and a second sheet supply reel supported on the layup tool may comprise a second type of fibre sheet material, wherein the first type of fibre sheet material is different from the second type of fibre sheet material.

In a preferred embodiment, each sheet supply reel comprises a shaft, preferably a centrally extending shaft surrounded by a cylindrical winding core. Preferably, the shaft is an airshaft. In a preferred embodiment, the layup tool comprises one or more sets of couplings or chucks mounted at opposite ends of the layup tool, each set of couplings or chucks being configured to receive a respective shaft end of a sheet supply roll. Preferably, the chuck are rotatable chucks. In a preferred embodiment, the couplings or chucks are pneumatically operated, preferably pneumatically operated safety chucks, preferably between an open and a closed position.

In a preferred embodiment, the couplings or chucks hold the shaft of the reel and transmits the torque during unwinding of the sheet from the sheet supply reel. In a preferred embodiment, the chuck comprises an insert, which can be opened and closed. In a preferred embodiment, the chuck is equipped with a motorized axis. Preferably, the layup tool allows for automatic loading and unloading of sheet supply reels onto and from the tool. In a preferred embodiment, each sheet supply reel is supported on each end by a rotatable shaft. In a preferred embodiment, a control arrangement is provided configured to effect an operation of the layup tool.

In a preferred embodiment, the layup tool comprises a brake system to control rotation of the shaft of the sheet supply reel. The brake system can be advantageously used to prevent unwinding of the sheet if not desired. The brake system preferably comprises a motor, preferably a servomotor. In a preferred embodiment, the brake system comprises a motor, such as a servomotor connected to a bevel gear, which in turn is connect to the chuck carrying the shaft of the sheet supply reel. The brake system is preferably configured to control torque of the reel when unwinding the sheet from the sheet supply reel.

In a preferred embodiment, the layup tool has a weight of not more than 450 kg, calculated without the sheet supply reels. In a preferred embodiment, the layup tool comprises at least one laser scanner configured to detect the presence of operators located underneath the layup tool. In a preferred embodiment, the laser scanner has a scanning angle of at least 240°. This provides an additional safety feature preventing that the layup tool is not operated directly above human operators.

In another aspect, the present invention relates to a rack comprising a plurality of receiving portions and a plurality of cartridges, each cartridge being arranged on a respective receiving portion of the rack, wherein a plurality of sheet supply rolls is arranged, preferably rotatably arranged, within each cartridge, wherein each cartridge comprises a guide member, preferably two opposing guide members, configured to guide each sheet supply roll along a predetermined path within the cartridge. The rack may have any of the above-discussed features or embodiments of the rack of the moulding assembly.

In another aspect, the present invention relates to a cartridge for receiving a plurality of sheet supply rolls, wherein each cartridge comprises a guide member, preferably two opposing guide members, configured to guide each sheet supply roll along a predetermined path within the cartridge. The cartridge may have any of the above-discussed features or embodiments of the cartridge of the moulding assembly.

In another aspect, the present invention relates to a moulding assembly for manufacturing a shell part of a wind turbine blade, the moulding assembly comprising a blade mould comprising a moulding cavity for moulding the shell part, the moulding cavity having with a root end and an opposing tip end, wherein the moulding assembly comprises a gantry device movable along the blade mould, and a layup tool suspended from the gantry device, the layup tool being configured to rotatably support at least two sheet supply reels. This layup tool can thus handle two reels of for example glass fibre material, for a total mass of layup material of up to 1 ton. This was found to enable a faster moulding process by carrying a larger amount of sheet material per loading, as compared to known layup tools. The layup tool of the present invention also enables the application of sheets of material in both directions root-to-tip and tip-to-root.

In a preferred embodiment, each sheet supply reel comprises a shaft, preferably an airshaft. In a preferred embodiment, the layup tool comprises one or more sets of couplings or chucks mounted at opposite ends of the layup tool, each set of couplings or chucks being configured to receive a respective shaft end of a sheet supply reel. In a preferred embodiment, the chucks are rotatable chucks.

In a preferred embodiment, the couplings or chucks are pneumatically operated, preferably pneumatically operated safety chucks, preferably between an open and a closed position. In a preferred embodiment, the couplings or chucks hold the shaft and transmits the torque during unwinding of the sheet from the sheet supply reel. In a preferred embodiment, the chuck comprises an insert, which can be opened and closed.

In a preferred embodiment, the chuck is equipped with a motorized axis. In a preferred embodiment, the moulding assembly allows for automatic loading and unloading of the layup tool. In a preferred embodiment, each sheet supply reel is supported on each end by a rotatable shaft. In a preferred embodiment, a control arrangement is provided configured to effect an operation of the layup tool.

In a preferred embodiment, the layup tool comprises a brake system to control rotation of the shaft of the sheet supply reel. The brake system can be advantageously used to prevent unwinding of the sheet if not desired. The brake system preferably comprises a motor, preferably a servomotor. In a preferred embodiment, the brake system comprises a motor, such as a servomotor connected to a bevel gear, which in turn is connect to the chuck carrying the shaft of the sheet supply reel. The brake system is preferably configured to control torque of the reel when unwinding the sheet from the sheet supply reel.

In a preferred embodiment, the layup tool comprises at least one laser scanner configured to detect the presence of operators located underneath the layup tool. In a preferred embodiment, the laser scanner has a scanning angle of at least 240°. In a preferred embodiment, the layup tool has a weight of not more than 450 kg, calculated without the sheet supply reels.

In another aspect, the present invention relates to a layup tool configured to be suspended from a gantry device, the layup tool being configured to rotatably support at least two sheet supply reels. The layup tool may have any of the above-discussed features or embodiments of the layup tool of the moulding assembly.

In another aspect the present invention relates to a method of manufacturing a shell part of a wind turbine blade using the moulding assembly of the present invention, the method comprising the steps of
- unwinding one or more sheets from each of the plurality of sheet supply rolls and placing the sheets into the moulding cavity of the blade mould,
- infusing resin into the moulding cavity containing said sheets, and
- curing or hardening the resin in order to form the blade part.

In a preferred embodiment, the one or more sheets are unwound from the plurality of sheet supply rolls in the order in which the sheet supply rolls are arranged within the cartridge.

Typically, the resin infusion step comprises vacuum assisted resin transfer moulding. The resin for injecting the sheets during the manufacturing of the shell part may be an epoxy, a polyester, a vinyl ester or another suitable thermoplastic or duroplastic material. In other embodiments, the resin may be a thermosetting resin, such as epoxy, vinyl ester or polyester, or a thermoplastic resin, such as nylon, PVC, ABS, polypropylene or polyethylene.

The present invention also relates to a blade part, such as a blade half or a blade, obtainable by the method of the present invention.

It will be understood that any of the above-described features or embodiments may apply to each of the different aspects of the present invention, such as the different moulding assemblies, the rack, the cartridge or the methods of the present invention. In particular, features and embodiments described with regard to the moulding assemblies or to the rack or to the cartridge may also apply to the methods of the present invention, and vice versa.

As used herein, the term "horizontal" means a plane or an axis that is parallel with respect to the ground. As used herein, the terms "vertical", "downwardly" and "upwardly" refer to directions of movement which is generally perpendicular with respect to the ground.

### Detailed description of the Invention

The invention is explained in detail below with reference to embodiments shown in the drawings, in which corresponding components are identified by the same reference numerals, wherein
Fig. 1 shows a wind turbine,
Fig. 2 shows a schematic view of a wind turbine blade,
Fig. 3 shows a schematic view of an airfoil profile through section I-I of Fig. 4,
Fig. 4 shows a schematic view of the wind turbine blade, seen from above and from the side,
Fig. 5 is a perspective drawing of a blade mould for producing a wind turbine shell part according to the present invention,
Fig. 6 is perspective drawing of a moulding assembly according to the present invention,
Fig. 7 is a perspective drawing of a rack according to the present invention,
Fig. 8 is a side view of a rack according to the present invention,
Fig. 9 is a sectional view taken along the line A-A' in Fig. 8,
Fig. 10 is a perspective view of a rack loaded with cartridges according to the present invention,
Fig. 11 is a front view of a rack loaded with cartridges according to the present invention,
Fig. 12 is a perspective view of a cartridge according to the present invention,
Fig. 13 is a sectional view seen along the line A-A' in Fig. 12,
Fig. 14 is an enlarged perspective view of the area encircled in Fig. 13,
Fig. 15 is a schematic view of a sheet supply roll of the present invention,
Fig. 16 is a perspective view of a shaft end of a sheet supply roll of the present invention,
Fig. 17 is an enlarged perspective view of a blocking member according to the present invention,
Fig. 18 is a perspective view of a layup tool of the present invention,
Fig. 19 is a front view of a layup tool of the present invention,
Fig. 20 is a side view of a layup tool of the present invention, and
Fig. 21 is a perspective view of a brake system of the layup tool of the present invention.

### Detailed Description

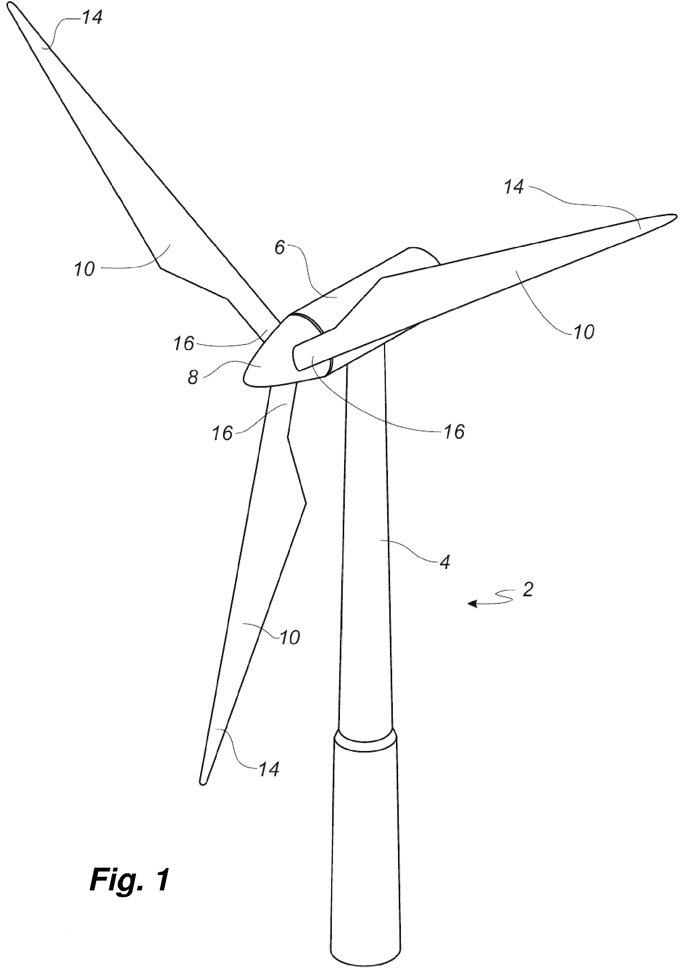

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

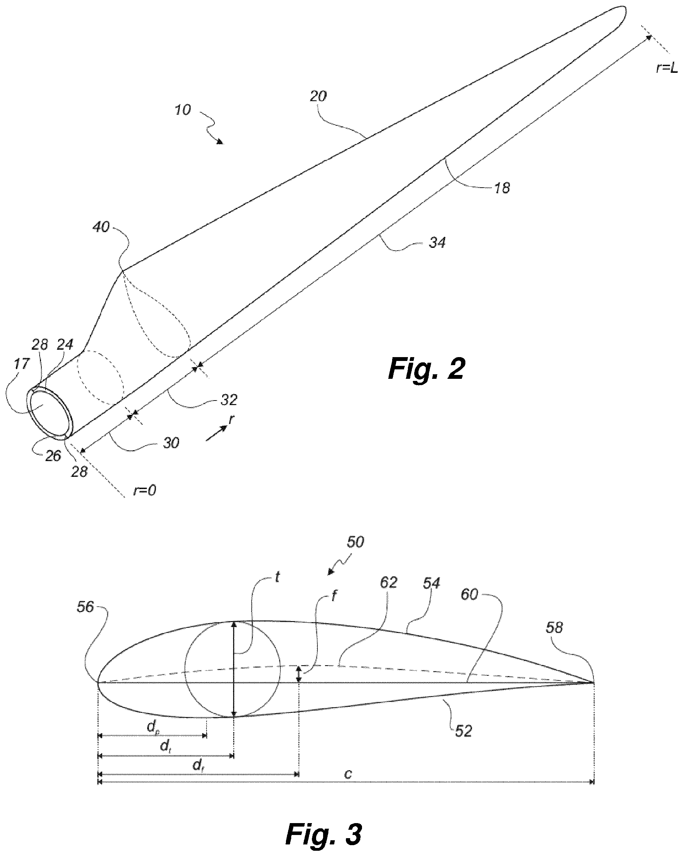

Fig. 2 shows a schematic view of a first embodiment of a wind turbine blade 10. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

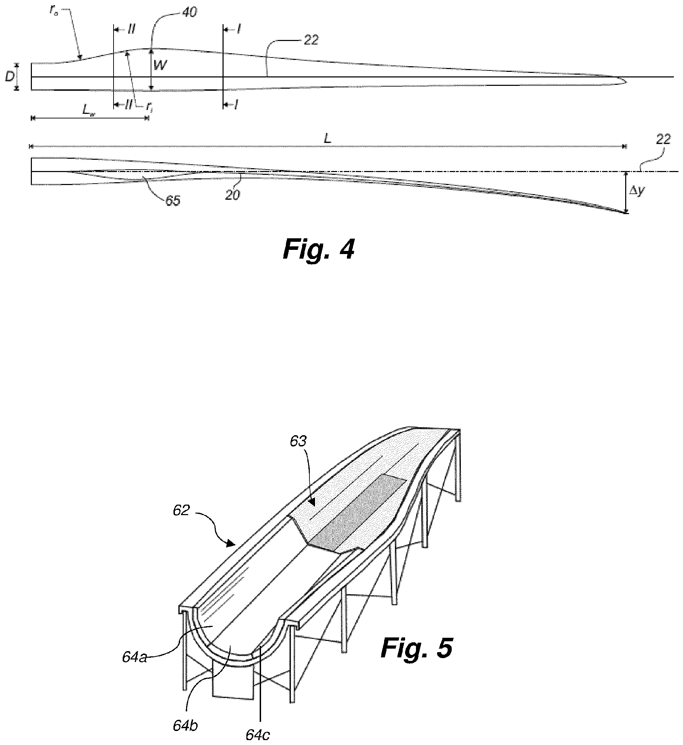

Figs. 3 and 4 depict parameters which are used to explain the geometry of the wind turbine blade. Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length c, the maximum camber f, the position *d_{f}* of the maximum camber f, the maximum airfoil thickness t, which is the largest diameter of the inscribed circles along the median camber line 62, the position *dₜ* of the maximum thickness *t,* and a nose radius (not shown). These parameters are typically defined as ratios to the chord length c. Thus, a local relative blade thickness *t*/*c* is given as the ratio between the local maximum thickness *t* and the local chord length c. Further, the position *dₚ* of the maximum pressure side camber may be used as a design parameter, and of course also the position of the maximum suction side camber.

Fig. 4 shows other geometric parameters of the blade. The blade has a total blade length *L*. As shown in Fig. 3, the root end is located at position *r* = 0, and the tip end located at *r = L.* The shoulder 40 of the blade is located at a position *r = L_{w},* and has a shoulder width *W,* which equals the chord length at the shoulder 40. The diameter of the root is defined as D. The curvature of the trailing edge of the blade in the transition region may be defined by two parameters, viz. a minimum outer curvature radius *rₒ* and a minimum inner curvature radius *rᵢ*, which are defined as the minimum curvature radius of the trailing edge, seen from the outside (or behind the trailing edge), and the minimum curvature radius, seen from the inside (or in front of the trailing edge), respectively. Further, the blade is provided with a prebend, which is defined as *Δy*, which corresponds to the out of plane deflection from a pitch axis 22 of the blade.

As illustrated in Fig. 5, a manufacturing process for manufacturing a blade part, such as a blade half, may involve laying a number of fibre sheets into a blade mould 62 having a moulding cavity 63. For example, the fibre sheets 64a, 64b, 64c are used for a blade section starting from the root end of the blade, such as the root region. When the layup process is completed, resin is infused to the moulding cavity 63, which is subsequently cured or hardened in order to form the blade part, such as a blade half.

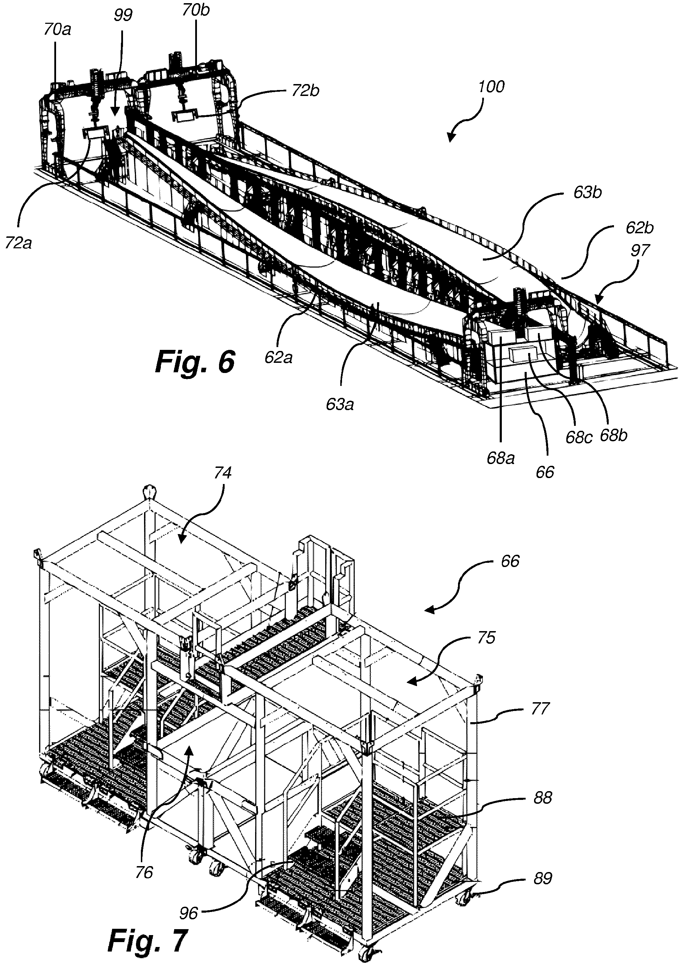

Fig. 6 is perspective drawing of a moulding assembly 100 according to the present invention for manufacturing a shell part of a wind turbine blade, such as one or more shell halves. In the illustrated embodiment, the moulding assembly 100 comprises two blade moulds 62a, 62b, each comprising a moulding cavity 63a, 63b, each configured for moulding a respective shell half. Each moulding cavity 63 has a root end 97 and an opposing tip end 99.

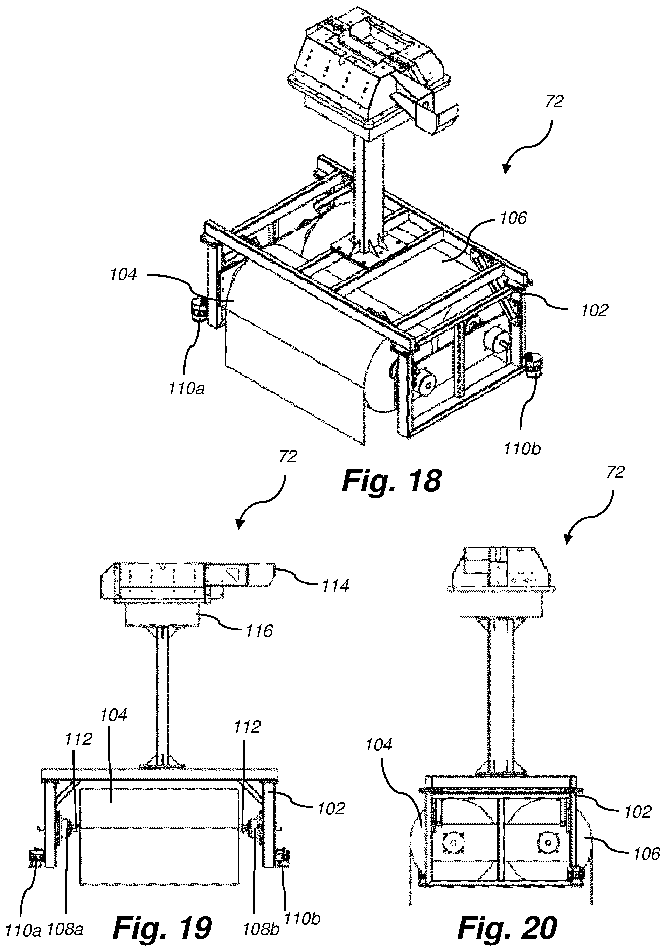

A rack 66 is arranged at the root end 97 of the moulding cavity 63a, here illustrated only for the mould 62a. Also, respective gantry devices 70a, 70b are provided for moving along the blade mould 62, wherein respective layup tools 72a, 72b are suspended from the gantry devices 70a, 70b. The layup tools 72a, 72b are configured to rotatably support at least two sheet supply rolls 90, as will be illustrated with respect to Figs. 18-21.

Now turning to Figs. 7-9, the rack 66 is generally constructed from a framework 77 of bars, such as metal or steel bars. The rack 66 also comprises at least two set of stairs 88 and platforms 96 at the top of said stairs.

The rack 66 also comprises a plurality of receiving portions 74, 75, 76, configured to receive respective cartridges 68a, 68b, 68c, each cartridge being arranged in a respective receiving portion 74, 75, 76 of the rack 66. The rack 66 may be loaded with at least one cartridge 68a, 68b having a first volume and at least one cartridge 68c having a second volume, wherein the first volume is larger than the second volume. In the illustrated embodiment, the rack 66 comprises two cartridges 68 having said first volume and one cartridge having said second volume.

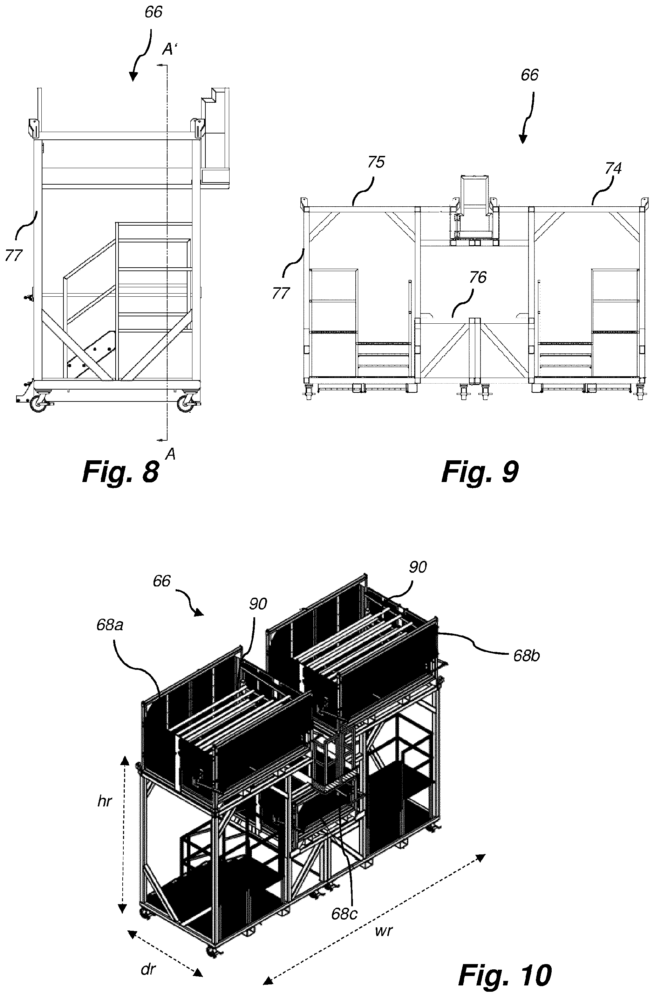

The cartridges 68a, 68b, 68c generally have a cuboid shape or box shape in the illustrated embodiment, comprising a front wall 79, facing the moulding cavity when the rack is arranged at the root end, opposing side walls 80a, 80b, and a rear wall 81. The cartridge 68 also comprises a floor plate 124 and a set of hollow profiles 126 mounted underneath the floor plate to facilitate mounting of the cartridge on or within the rack. The cartridge 68 comprises an access opening 98, preferably formed in the front wall, facing the root end of the moulding cavity 63 of the blade mould 62, said access opening 98 being configured for accessing and unwinding one or more sheets from a sheet supply roll 90 arranged within the cartridge 68. The rack loaded with the cartridges 68a, 68b, 68c is illustrated in Fig. 10. Each of the cartridges 68a, 68b, 68c is loaded with a plurality of sheet supply rolls 90. Fig. 10 also illustrates the height hr (without the loaded cartridges), the depth dr, and the width wr of the rack 66.

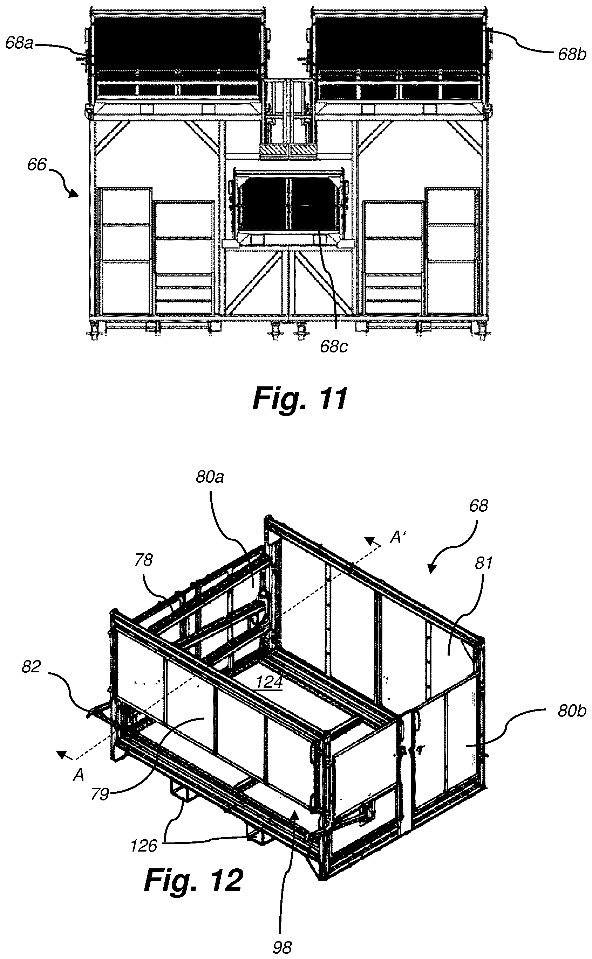

As best seen in Figs. 12-14, each cartridge comprises two opposing guide members formed on the inside surface of the respective side walls 80a, 80b, the details of which are only shown for one the two guide members, i.e., guide member 78 formed on the inside surface of side walls 80a. However, both guide members are designed in the same way in the illustrated embodiment. The guide members are configured to rotatably support a plurality of sheet supply rolls 90 within the cartridge, and to guide each sheet supply roll 90 along a predetermined path within the cartridge. A plurality of sheet supply rolls 90 can be arranged within each cartridge on the guide member 78 of the respective cartridge. Thus, the sheet supply rolls 90 can be arranged within the cartridges 68 in a predefined order corresponding to a layup sequence of the sheets 92 in the blade mould 62.

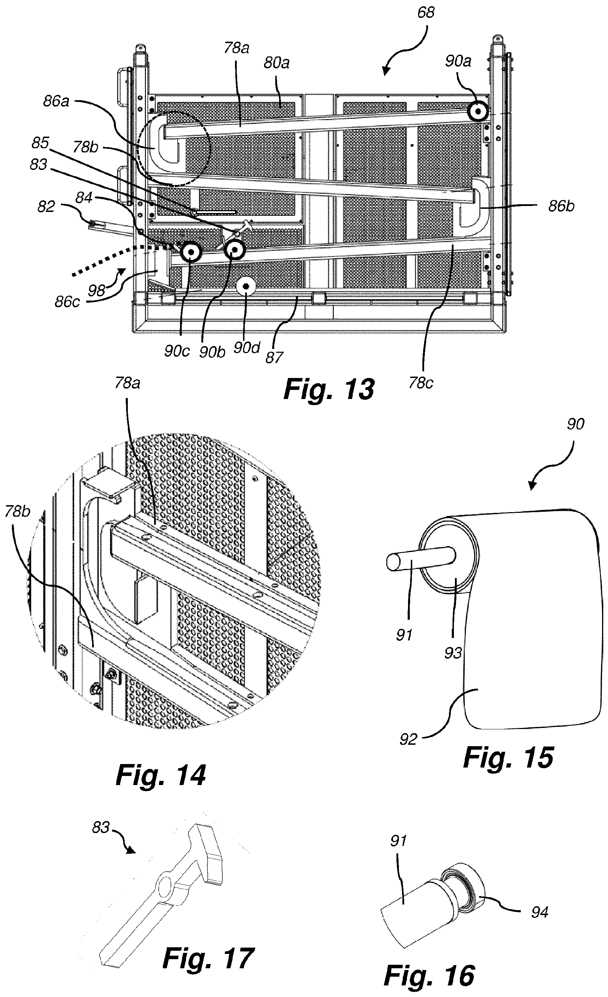

The guide member 78 comprises a guide slot or track 66 formed on the inside of opposing sidewalls 80a, 80b of the cartridge 68. Each sheet supply roll may comprise a shaft 91 with bearings 94 arranged at the opposing ends of the shaft 91, see partial perspective drawing of Fig. 16 showing the shaft end with bearing 94. wherein the bearings 94 of each sheet supply roll are received in a respective guide slot or track. In the illustrated embodiment, the guide slot or track is subdivided into an upper segment 78a, a middle segment 78b, and a lower segment 78c which together define a downwardly inclined path to allow for downward passage of the sheet supply roll along the guide slot or track, preferably by gravitational motion. The upper segment 78a is connected to the middle segment 78b by a chute 86a. Likewise, the middle segment 78b is connected to the lower segment 78c by chute 86b.

Thus, a plurality of sheet supply rolls are loaded inside the cartridge 68 over three levels defined by the upper segment 78a, middle segment 78b, and lower segment 78c. Also, the cartridge 68 comprises a movable blocking member 83 for blocking the passage of the sheet supply roll along the guide slot or track 66 in a first position, and for allowing the passage of the sheet supply roll in a second position. An enlarged perspective view of the blocking member is provided in Fig. 17. Once the rolls 90 are in place, an operator can action the lever 82 to turn or lift the blocking member 83 to enable one roll to pass until it reaches a ramp 84 that is sloped upwards, see Fig. 13. Here, the roll is placed in a position adjacent to the access opening 98 to allow unwinding of sheets from the roll and sheet placement in the moulding cavity, while the ramp 84 prevents further translational movement of the roll along the path of the guide member.

Once the sheet supply roll is emptied, the operator can use a turning nob or lever to actuate a pushing member 85 to push the empty roll down chute 86c to a storage level 87. After layup, the empty rolls can be fetched from the storage level 87 of the cartridge.

Fig. 13 schematically illustrates these stages by showing four sheet supply rolls 90a-d. The other rolls in between these selected rolls 90a-d are omitted from the figure for better legibility. The guide member with segments 78a, 78b, 78b is configured to guide each sheet supply roll 90a-d along a predetermined path within the cartridge. Said predetermined path starts at a loading position which is indicated by roll 90a. The rolls then move along the generally downwardly inclined path by gravitational movement until they reach the blocking member 83, which blocks the passage, as indicated by roll 90b. When rotated, the blocking member allows one roll to proceed to the dispensing position at the upwardly slope ramp 84, as indicated by roll 90c. Here, the sheet(s) is unwound from the roll, as indicated by the dotted line representing a fibre sheet which is pulled through the access opening 98 towards the blade mould (not shown in Fig. 13). Once the roll is empty, the pushing member 85 can be used to push the roll up the ramp and down through the chute 86c into the disposal position at the lowest level, as indicated by roll 90d.

Fig. 18 is a perspective view of a layup tool of the present invention. The layup tool 72 is suspended from the gantry device, the layup tool being configured to rotatably support at least two sheet supply reels 104, 106. As seen in the front view of Fig. 19, the layup tool comprises one or more set of couplings or chucks 108a, 108b mounted at opposite ends of the layup tool, each set of couplings or chucks 108a, 108b being configured to receive a respective shaft end of a sheet supply reel 104, 106. Also, the layup tool comprises at least one laser scanner 110a, 110b configured to detect the presence of operators located underneath the layup tool.

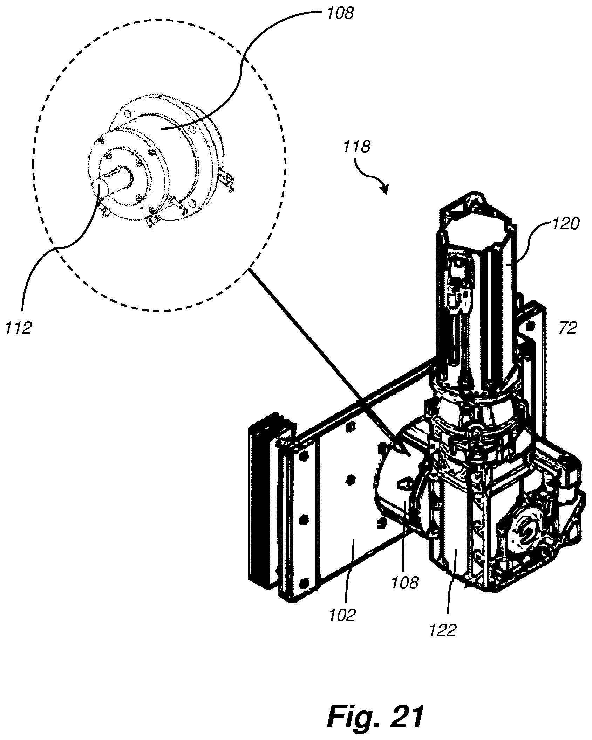

Fig. 21 is a perspective view of a brake system 118 of the layup tool of the present invention. The brake system comprises a motor 120, such as a servomotor connected to a bevel gear 122, which in turn is connect to the chuck 108 carrying the shaft 112 of the sheet supply reel, as illustrated in the enlarged view of the dashed circle in Fig. 21. The brake system 118 is preferably configured to control torque of the reel when unwinding the sheet from the sheet supply reel.

### List of reference numerals

- 2: wind turbine
- 4: tower
- 6: nacelle
- 8: hub
- 10: blade
- 14: blade tip
- 16: blade root
- 18: leading edge
- 20: trailing edge
- 22: pitch axis
- 30: root region
- 32: transition region
- 34: airfoil region
- 40: shoulder / position of maximum chord
- 50: airfoil profile
- 52: pressure side
- 54: suction side
- 56: leading edge
- 58: trailing edge
- 60: chord
- 62: blade mould
- 63: moulding cavity
- 64: fibre plies
- 66: rack
- 68: cartridge
- 70: gantry device
- 72: layup tool
- 74: first receiving portion
- 75: second receiving portion
- 76: third receiving portion
- 77: framework
- 78: guide member
- 79: front wall
- 80: side walls
- 81: rear wall
- 82: lever
- 83: blocking member
- 84: ramp
- 85: pushing member
- 86: chute
- 87: storage level
- 88: stairs
- 89: wheels
- 90: sheet supply rolls
- 91: shaft
- 92: sheet of fibre material
- 93: cylindrical core
- 94: bearing
- 96: platform
- 97: root end
- 98: access opening
- 99: tip end
- 100: moulding assembly
- 102: framework
- 104: first sheet supply reel
- 106: second sheet supply reel
- 108: safety chucks
- 110: laser scanner
- 112: shaft
- 114: end of gantry y-axis
- 116: quick connect interface
- 118: brake system
- 120: servomotor
- 122: bevel gear
- 124: floor plate
- 126: hollow profiles
- *c*: chord length
- *dₜ*: position of maximum thickness
- *d_{f}*: position of maximum camber
- *dₚ*: position of maximum pressure side camber
- *f*: camber
- *L*: blade length
- *r*: local radius, radial distance from blade root
- *t*: thickness
- Δ*y*: prebend

## Claims

1. A moulding assembly (100) for manufacturing a shell part of a wind turbine blade, the moulding assembly (100) comprising
a blade mould (62) comprising a moulding cavity (63) for moulding the shell part, the moulding cavity (63) having a root end and an opposing tip end,
a rack (66) comprising a plurality of receiving portions (74, 75, 76),
a plurality of cartridges (68a, 68b, 68c), each cartridge being arranged on a respective receiving portion (74, 75, 76) of the rack (66),
a plurality of sheet supply rolls (90) arranged within each cartridge,
wherein each cartridge comprises a guide member (78) configured to guide each sheet supply roll (90) along a predetermined path within the cartridge.

2. A moulding assembly (100) according to claim 1, wherein each cartridge comprises an access opening (98), and wherein the predetermined path leads to a dispensing position located at the access opening (98) to allow unwinding of one or more sheets from a sheet supply roll through the access opening (98).

3. A moulding assembly (100) according to claims 1 or 2, wherein the sheet supply rolls (90) are arranged within the cartridges (68) in a predefined order corresponding to a layup sequence of the sheets (92) in the blade mould (62).

4. A moulding assembly (100) according to any of the preceding claims, wherein each guide member (78) comprises a guide slot or track.

5. A moulding assembly (100) according to any of the preceding claims, wherein the predetermined path comprises a downwardly inclined path to allow for downward passage of the sheet supply roll along the guide member, preferably by gravitational motion.

6. A moulding assembly (100) according to any of the preceding claims, wherein each cartridge comprises at least one movable blocking member (83) for, in a first position, blocking the passage of the sheet supply roll along the guide member, and, in a second position, for allowing the passage of the sheet supply roll beyond the blocking member (83).

7. A moulding assembly (100) according to any of the preceding claims, wherein each sheet supply roll comprises a shaft (91) with bearings (94) arranged at opposing ends of the shaft (91), wherein the bearings (94) of each sheet supply roll are received in respective guide members.

8. A moulding assembly (100) according to any of the preceding claims, wherein the rack (66) comprises at least one cartridge (68a, 68b) having a first volume and at least one cartridge (68c) having a second volume, wherein the first volume is larger than the second volume.

9. A moulding assembly (100) according to any of the preceding claims, wherein each guide member comprises at least two segments (78a, 78b, 78c) which are vertically spaced apart.

10. A moulding assembly (100) according to any of the preceding claims, wherein each cartridge comprises two opposing guide members, each comprising a guide slot or track, formed on, or adjacent to, the inside surface of opposing sidewalls of the cartridge.

11. A moulding assembly (100) according to any of the preceding claims, wherein the moulding assembly (100) further comprises
a gantry device (70) movable along the blade mould (62),
a layup tool (72) suspended from the gantry device, the layup tool being configured to rotatably support at least two sheet supply reels (104, 106).

12. A moulding assembly (100) according to claim 11, wherein the layup tool comprises one or more set of couplings or chucks (108a, 108b) mounted at opposite ends of the layup tool, each set of couplings or chucks (108a, 108b) being configured to receive a respective shaft end of a sheet supply reel.

13. A moulding assembly (100) according to claims 11 or 12, wherein the layup tool comprises at least one laser scanner (110a, 110b) configured to detect the presence of operators located underneath the layup tool.

14. A method of manufacturing a shell part of a wind turbine blade using the moulding assembly (100) according to any of claims 1-13, the method comprising
- unwinding one or more sheets from each of the plurality of sheet supply rolls (90) and placing the sheets into the moulding cavity (63) of the blade mould (62),
- infusing resin into the moulding cavity (63) containing said sheets, and
- curing or hardening the resin in order to form the blade part.

15. A method according to claim 14, wherein the one or more sheets are unwound from the plurality of sheet supply rolls (90) in the order in which the sheet supply rolls (90) are arranged within the cartridge.

## Patentansprüche

1. Formanordnung (100) zur Herstellung eines Schalenteils einer Windturbinenschaufel, wobei die Formanordnung (100) Folgendes umfasst
eine Schaufelform (62), umfassend einen Formhohlraum (63) zum Formen des Schalenteils, wobei der Formhohlraum (63) ein Wurzelende und ein entgegengesetztes Spitzenende aufweist,
ein Gestell (66), umfassend eine Vielzahl von Aufnahmeabschnitten (74, 75, 76),
eine Vielzahl von Kartuschen (68a, 68b, 68c), wobei jede Kartusche an einem jeweiligen Aufnahmeabschnitt (74, 75, 76) des Gestells (66) aufgenommen ist,
eine Vielzahl von Bahnzufuhrrollen (90), die in jeder Kartusche angeordnet sind,
wobei jede Kartusche ein Führungsglied (78) umfasst, das ausgebildet ist, um jede Bahnzufuhrrolle (90) entlang eines vorbestimmten Weges innerhalb der Kartusche zu führen.

2. Formanordnung (100) nach Anspruch 1, wobei jede Kartusche eine Zugangsöffnung (98) umfasst, und wobei der vorbestimmte Weg zu einer Abgabeposition führt, die sich an der Zugangsöffnung (98) befindet, um das Abwickeln einer oder mehrerer Bahnen von einer Bahnzufuhrrolle durch die Zugangsöffnung (98) hindurch zu ermöglichen.

3. Formanordnung (100) nach Ansprüchen 1 oder 2, wobei die Bahnzufuhrrollen (90) innerhalb der Kartuschen (68) in einer vordefinierten Reihenfolge angeordnet sind, die einer Ablagefolge der Bahnen (92) in der Schaufelform (62) entspricht.

4. Formanordnung (100) nach einem der vorstehenden Ansprüche, wobei jedes Führungsglied (78) einen Führungsschlitz oder eine Führungsbahn umfasst.

5. Formanordnung (100) nach einem der vorstehenden Ansprüche, wobei der vorbestimmte Weg einen abwärts geneigten Weg umfasst, um einen Abwärtsdurchgang der Bahnzufuhrrolle entlang des Führungsglieds, vorzugsweise durch Gravitationsbewegung, zu ermöglichen.

6. Formanordnung (100) nach einem der vorstehenden Ansprüche, wobei jede Kartusche mindestens ein bewegliches Sperrglied (83) zum Sperren des Durchgangs der Bahnzufuhrrolle entlang des Führungsglieds in einer ersten Position und zum Ermöglichen des Durchgangs der Bahnzufuhrrolle über das Sperrglied (83) hinaus in einer zweiten Position umfasst.

7. Formanordnung (100) nach einem der vorstehenden Ansprüche, wobei jede Bahnzufuhrrolle eine Welle (91) mit Lagern (94) umfasst, die an entgegengesetzten Enden der Welle (91) angeordnet sind, wobei die Lager (94) jeder Bahnzufuhrrolle in jeweiligen Führungsgliedern aufgenommen sind.

8. Formanordnung (100) nach einem der vorstehenden Ansprüche, wobei das Gestell (66) mindestens eine Kartusche (68a, 68b), die ein erstes Volumen aufweist, und mindestens eine Kartusche (68c), die ein zweites Volumen aufweist, umfasst, wobei das erste Volumen größer ist, als das zweite Volumen.

9. Formanordnung (100) nach einem der vorstehenden Ansprüche, wobei jedes Führungsglied mindestens zwei Segmente (78a, 78b, 78c) umfasst, die vertikal voneinander beabstandet sind.

10. Formanordnung (100) nach einem der vorstehenden Ansprüche, wobei jede Kartusche zwei entgegengesetzte Führungsglieder umfasst, die jeweils einen Führungsschlitz oder eine Führungsbahn umfassen, gebildet auf oder angrenzend an die Innenoberfläche entgegengesetzter Seitenwände der Kartusche.

11. Formanordnung (100) nach einem der vorstehenden Ansprüche, wobei die Formanordnung (100) weiter Folgendes umfasst
eine Portalvorrichtung (70), die entlang der Schaufelform (62) beweglich ist,
ein Ablagewerkzeug (72), das an der Portalvorrichtung hängt, wobei das Ablagewerkzeug ausgebildet ist, um mindestens zwei Bahnzufuhrrollen (104, 106) drehend zu tragen.

12. Formanordnung (100) nach Anspruch 11, wobei das Ablagewerkzeug einen oder mehrere Sätze an Kopplungen oder Spannfutter (108a, 108b) umfasst, die an entgegengesetzten Enden des Ablagewerkzeugs montiert sind, wobei jeder Satz an Kopplungen oder Spannfutter (108a, 108b) ausgebildet ist, um ein jeweiliges Wellenende einer Bahnzufuhrrolle aufzunehmen.

13. Formanordnung (100) nach Ansprüchen 11 oder 12, wobei das Ablagewerkzeug mindestens einen Laser-Scanner (110a, 110b) umfasst, der ausgebildet ist, um das Vorhandensein von Bedienern zu erkennen, die sich unterhalb des Ablagewerkzeugs befinden.

14. Verfahren zur Herstellung eines Schalenteils einer Windturbinenschaufel unter Verwendung der Formanordnung (100) nach einem der Ansprüche 1-13, wobei das Verfahren Folgendes umfasst
- Abwickeln einer oder mehrerer Bahnen von jeder der Vielzahl von Bahnzufuhrrollen (90) und Platzieren der Bahnen in den Formhohlraum (63) der Schaufelform (62),
- Infundieren von Harz in den Formhohlraum (63), der die Bahnen enthält, und
- Aushärten oder Härten des Harzes, um das Schaufelteil zu bilden.

15. Verfahren nach Anspruch 14, wobei die eine oder mehrere Bahnen von der Vielzahl von Bahnzufuhrrollen (90) in der Reihenfolge abgewickelt werden, in der die Bahnzufuhrrollen (90) innerhalb der Kartusche angeordnet sind.

## Revendications

1. Ensemble pour mouler (100) pour fabriquer une partie de coque d'une pale d'éolienne, l'ensemble pour mouler (100) comprenant
un moule de pale (62) comprenant une cavité de moulage (63) pour mouler la partie de coque, la cavité de moulage (63) ayant une extrémité d'emplanture et une extrémité de pointe opposée,
un rack (66) comprenant une pluralité de logements de réception (74, 75, 76),
une pluralité de cartouches (68a, 68b, 68c), chaque cartouche étant disposée sur une partie de réception respectif (74, 75, 76) du rack (66),
une pluralité de rouleaux d'alimentation en feuilles (90) disposés à l'intérieur de chaque cartouche,
dans lequel chaque cartouche comprend un élément de guidage (78) configuré pour guider chaque rouleau d'alimentation en feuilles (90) le long d'un trajet prédéterminé à l'intérieur de la cartouche.

2. Ensemble pour mouler (100) selon la revendication 1, dans lequel chaque cartouche comprend une ouverture d'accès (98), et dans lequel le trajet prédéterminé mène à une position de distribution située au niveau de l'ouverture d'accès (98) pour permettre le déroulage d'une ou de plusieurs feuilles à partir d'un rouleau d'alimentation en feuilles à travers l'ouverture d'accès (98).

3. Ensemble pour mouler (100) selon les revendications 1 ou 2, dans lequel les rouleaux d'alimentation en feuilles (90) sont disposés à l'intérieur des cartouches (68) dans un ordre prédéfini correspondant à une séquence de pose des feuilles (92) dans le moule de pale (62).

4. Ensemble pour mouler (100) selon l'une quelconque des revendications précédentes, dans lequel chaque élément de guidage (78) comprend une rainure ou un rail de guidage.

5. Ensemble pour mouler (100) selon l'une quelconque des revendications précédentes, dans lequel le trajet prédéterminé comprend un trajet incliné vers le bas pour permettre le passage vers le bas du rouleau d'alimentation en feuilles le long de l'élément de guidage, de préférence par mouvement gravitationnel.

6. Ensemble pour mouler (100) selon l'une quelconque des revendications précédentes, dans lequel chaque cartouche comprend au moins un élément de blocage mobile pour, dans une première position, bloquer le passage du rouleau d'alimentation en feuilles le long de l'élément de guidage, et, dans une seconde position, permettre le passage du rouleau d'alimentation en feuilles au-delà de l'élément de blocage (83).

7. Ensemble pour mouler (100) selon l'une quelconque des revendications précédentes, dans lequel chaque rouleau d'alimentation en feuilles comprend un arbre (91) avec des roulements (94) disposés à des extrémités opposées de l'arbre (91), dans lequel les roulements (94) de chaque rouleau d'alimentation en feuilles sont reçus dans des éléments de guidage respectifs.

8. Ensemble pour mouler (100) selon l'une quelconque des revendications précédentes, dans lequel le rack (66) comprend au moins une cartouche (68a, 68b) ayant un premier volume et au moins une cartouche (68c) ayant un second volume, dans lequel le premier volume est plus grand que le second volume.

9. Ensemble pour mouler (100) selon l'une quelconque des revendications précédentes, dans lequel chaque élément de guidage comprend au moins deux segments (78a, 78b, 78c) qui sont espacés verticalement.

10. Ensemble pour mouler (100) selon l'une quelconque des revendications précédentes, dans lequel chaque cartouche comprend deux éléments de guidage opposés, comprenant chacun une rainure ou un rail de guidage, formés sur, ou adjacents à, la surface intérieure de parois latérales opposées de la cartouche.

11. Ensemble pour mouler (100) selon l'une quelconque des revendications précédentes, dans lequel l'ensemble pour mouler (100) comprend en outre
un dispositif portique (70) mobile le long du moule de pale (62),
un outil de pose (72) suspendu au dispositif portique, l'outil de pose étant configuré pour supporter de manière rotative au moins deux bobines d'alimentation en feuilles (104, 106).

12. Ensemble pour mouler (100) selon la revendication 11, dans lequel l'outil de pose comprend un ou plusieurs ensembles d'accouplements ou mandrins (108a, 108b) montés à des extrémités opposées de l'outil de pose, chaque ensemble d'accouplements ou mandrins (108a, 108b) étant configuré pour recevoir une extrémité d'arbre respective d'une bobine d'alimentation en feuilles.

13. Ensemble pour mouler (100) selon les revendications 11 ou 12, dans lequel l'outil de pose comprend au moins un scanner laser (110a, 110b) configuré pour détecter la présence d'opérateurs situés au-dessous de l'outil de pose.

14. Procédé de fabrication d'une partie de coque d'une pale d'éolienne utilisant l'ensemble pour mouler (100) selon l'une quelconque des revendications 1-13, le procédé comprenant les étapes consistant à :
- dérouler une ou plusieurs feuilles à partir de chacun des rouleaux de la pluralité de rouleaux d'alimentation en feuilles (90)
et placer les feuilles dans la cavité de moulage (63) du moule de pale (62),
- infuser de la résine dans la cavité de moulage (63) contenant lesdites feuilles, et
- durcir ou rigidifier la résine afin de former la partie de pale.

15. Procédé selon la revendication 14, dans lequel la ou les feuilles sont déroulées à partir de la pluralité de rouleaux d'alimentation en feuilles (90) dans l'ordre dans lequel les rouleaux d'alimentation en feuilles (90) sont disposés à l'intérieur de la cartouche.
